# EUROPÄISCHE PATENTSCHRIFT

(11) **EP 3 964 107 B1**
(45) Veröffentlichungstag und Bekanntmachung des Hinweises auf die Patenterteilung: **10.04.2024**
(21) Anmeldenummer: 21189363.1
(22) Anmeldetag: 03.08.2021
(51) Int. Cl.: A47J 42/18, A47J 42/08, A47J 31/42

(54) **MAHLVORRICHTUNG UND KAFFEEMASCHINE**
GRINDER AND COFFEE MACHINE
MOULIN ET MACHINE À CAFÉ

(30) Priorität: 02.09.2020 DE 102020122938
(43) Veröffentlichungstag der Anmeldung: 09.03.2022
(73) Patentinhaber: Melitta Europa GmbH & Co. KG, 32427 Minden (DE)
(72) Erfinder: SACHTLEBEN, Andreas, 32427 Minden (DE)
(74) Vertreter: Dantz, Jan Henning

(56) Entgegenhaltungen:
- EP-A1- 3 473 148
- EP-A1- 3 613 319
- WO-A1-2020/006610
- CN-U- 203 841 559
- DE-A1-102015 109 726

## Beschreibung

Die vorliegende Erfindung betrifft eine Mahlvorrichtung, insbesondere für eine Kaffeemaschine, mit einem in einem Gehäuse angeordneten oberen Mahlwerkzeug und einem unteren Mahlwerkzeug, das für einen Mahlvorgang relativ zu dem oberen Mahlwerkzeug drehbar ist, wobei eine Verstelleinrichtung zur Einstellung eines Mahlgrades für das durch die Mahlwerkzeuge zerkleinerte Mahlgut vorgesehen ist, und das obere Mahlwerkzeug an einem Träger gehalten ist, und eine Kaffeemaschine.

Die WO 2014/026485 A1 offenbart eine automatische Kaffeemaschine mit einem Mahlwerk, bei dem der Mahlspalt zwischen zwei Mahlwerkzeugen bzw. der Mahlgrad einstellbar ist. Über einen am Gehäuse befindlichen drehbaren Verstellknopf wird eine Rotationsbewegung in eine translatorische Bewegung eines Mahlwerkzeuges umgewandelt, um den Mahlgrad zu verstellen. Die Verstellvorrichtung zur Einstellung des Mahlgrades benötigt ein Getriebe und somit relativ viel Bauraum.

Für hochwertige Kaffeemaschinen sind auch Mahlwerke bekannt (WO 2020 /002493 A1), bei denen im Betrieb die Kraft auf das erste Mahlwerkzeug oder das zweite Mahlwerkzeug einstellbar ist. Solche Lösungen sind für Haushaltskaffeemaschinen meist zu aufwändig.

WO 2020/0006610 offenbart eine Espressomaschine mit einem Mahlwerk für Kaffeebohnen, bei dem der Mahlgrad einstellbar ist.

Es ist daher Aufgabe der vorliegenden Erfindung, eine Mahlvorrichtung für eine Kaffeemaschine zu schaffen, die kompakt aufgebaut ist und mit einfachen Mitteln eine Einstellung eines Mahlgrades zwischen zwei Mahlwerkzeugen ermöglicht.

Diese Aufgabe wird mit einer Mahlvorrichtung mit den Merkmalen des Anspruches 1 gelöst.

Bei der erfindungsgemäßen Mahlvorrichtung ist das obere Mahlwerkzeug an einem Träger gehalten, der in vertikale Richtung verschiebbar, aber drehfest an einem Verstellelement einer Verstelleinrichtung zur Einstellung des Mahlgrades gehalten ist, wobei die Verstelleinrichtung Führungsmittel für den Träger umfasst, die bei einer Drehung des Verstellelementes den Träger mit dem oberen Mahlwerkzeug in vertikale Richtung zur Einstellung des Mahlgrades bewegt, beispielsweise einer Kraft auf die obere Mahlscheibe gegen die untere Mahlscheibe. Dadurch kann durch eine Drehbewegung des an einem Boden eines Mahlbehälters angeordneten Bedienelementes eine Einstellung des Mahlgrades vorgenommen werden, sodass keine voluminöse Verstelleinrichtung mit einem Getriebe außerhalb der Mahlvorrichtung vorgesehen werden muss. Dies ermöglicht einen kompakten Aufbau und die Ausbildung einer Verstelleinrichtung mit wenigen Bauteilen.

Vorzugsweise ist der Träger mit dem oberen Mahlwerkzeug aus dem Gehäuse der Mahlvorrichtung abnehmbar. Dies ermöglicht eine einfache Reinigung, wenn der Träger mit dem oberen Mahlwerkzeug entfernt ist, so dass eine geschmackliche Beeinträchtigung durch älteres Mahlgut verhindert werden kann. Der Träger kann zusammen mit dem Mahlwerkzeug, dem Verstellelement und einem Bedienelement eine herausnehmbare Einheit bilden.

Für eine Montage des Trägers mit dem oberen Mahlwerkzeug kann das Verstellelement mit einer Bajonettverriegelung an dem Gehäuse verriegelbar sein. Die Bajonettverriegelung kann dabei mindestens eine Rippe umfassen, vorzugsweise eine nach innen hervorstehende Rippe, an der das Verstellelement über einen radial hervorstehenden Vorsprung gegen ein Anheben gesichert ist, wobei der Vorsprung bei einer Drehung des Verstellelementes entlang der Rippe geführt ist. Über den Umfang verteilt können mehrere Vorsprünge und mehrere Rippen vorgesehen sein, um eine Neigung des Verstellelementes und eine einseitige Belastung zu verhindern.

In einer bevorzugten Ausgestaltung ist an dem Verstellelement ein nach oben hervorstehendes Bedienelement vorgesehen, mittels dem der Träger drehbar ist. Das Bedienelement kann beispielsweise teilweise oder vollständig in dem Innenraum eines Behälters zur Bevorratung von Mahlgut angeordnet sein. Das Bedienelement kann dabei einen drehbaren Stab umfassen, der am oberen Ende einen Bedienknopf oder ein anderes Betätigungselement aufweist, um manuell über das Bedienelement eine Einstellung des Mahlgrades vornehmen zu können.

Zwischen dem Träger und dem Verstellelement ist vorzugsweise eine Dichtung vorgesehen, so dass bei einer Relativbewegung des Trägers zu dem Verstellelement durch eine Verschiebung in vertikale Richtung eine Abdichtung erhalten bleibt, die eine Ansammlung von Verunreinigungen in Hohlräumen vermeidet oder verringert. Das Verstellelement kann dabei eine nach unten offene Aufnahme aufweisen, in die der Träger teilweise eingefügt ist.

In einer weiteren Ausgestaltung ist das obere Mahlwerkzeug in einem Ring angeordnet, der an dem Gehäuse drehbar gelagert ist und mindestens ein Rastelement aufweist, um das obere Mahlwerkzeug in der eingestellten Position zu verrasten. Dadurch wird auch bei Vibrationen durch einen Mahlvorgang eine Verstellung des Mahlgrades verhindert. Der Ring und/oder das Gehäuse können mindestens einen biegbaren Rasthaken aufweisen, der in Eingriff mit einer Verzahnung steht, so dass eine Drehbewegung zwischen Ring und Gehäuse nach der erfolgten Einstellung vermieden wird.

In dem Träger und dem Verstellelement sind vorzugsweise jeweils mittig Öffnungen zur Durchführung des Mahlgutes vorgesehen. Die Mahlwerkzeuge können dabei als Kegel oder Mahlscheiben ausgebildet sein.

Die erfindungsgemäße Mahlvorrichtung wird vorzugsweise bei einer Kaffeemaschine eingesetzt, die einen Bohnenbehälter aufweist, an dessen Boden die Mahlvorrichtung angeordnet ist. Die Kaffeemaschine kann dabei so ausgebildet sein, dass das gemahlene Gut in einen Filterhalter zugeführt wird, in den dann heißes Wasser eingeleitet wird, wie dies in der EP 3 225 142 A1 beschrieben ist, oder so ausgebildet sein, dass die Mahlvorrichtung neben einer Zuführung für heißes Wasser angeordnet ist, so dass der Filterhalter nach Aufnahme des Mahlgutes zu einer Brühvorrichtung versetzt wird, wie dies in der EP 3 583 876 A1 gezeigt ist.

Die Erfindung wird nachfolgend anhand eines Ausführungsbeispiels mit Bezug auf die beigefügten Zeichnungen näher erläutert. Es zeigen:

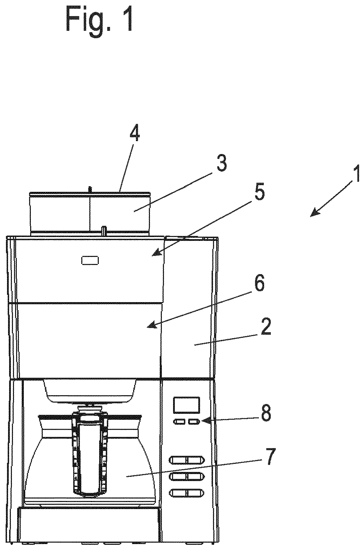

- Figur 1: eine schematische Ansicht einer erfindungsgemäßen Kaffeemaschine;
- Figur 2: eine perspektivische Darstellung der erfindungsgemäßen Mahlvorrichtung bei der Montage;
- Figuren 3A und 3B: zwei Ansichten des oberen Mahlwerkzeuges mit dem Bedienelement;
- Figur 4: eine Ansicht eines Bodens des Bohnenbehälters der Mahlvorrichtung;
- Figuren 5A und 5B: zwei Ansichten der Mahlvorrichtung in der montierten Position;
- Figuren 6A und 6B: zwei Ansichten einer Rasteinrichtung der Mahlvorrichtung;
- Figuren 7A und 7B: zwei Ansichten eines Halterings der Mahlvorrichtung, und
- Figuren 8A und 8B: zwei Ansichten des Ringes der Rasteinrichtung der Mahlvorrichtung.

Eine Kaffeemaschine 1 umfasst an einem Gehäuse 2 einen Bohnenbehälter 3, der über einen Deckel 4 verschließbar ist. Unter dem Bohnenbehälter 3 ist eine Mahlvorrichtung 5 angeordnet, um gemahlenes Kaffeemehl in einen Filter einzufüllen, der an einem Filterhalter 6 angeordnet ist. In den Filter kann über eine Pumpe und eine Heizeinrichtung heißes Wasser eingegeben werden, um gebrühten Kaffee in ein Gefäß 7 einzufüllen. Die Kaffeemaschine 1 wird über ein Bedienfeld 8 gesteuert und umfasst dabei ein Gehäuse 2, bei dem die Mahlvorrichtung 5 zwischen Bohnenbehälter 3 und Filterhalter 6 angeordnet ist. Es ist auch möglich, die Mahlvorrichtung separat von einer Kaffeemaschine 1 als separates Gerät vorzusehen oder statt Kaffeebohnen ein anderes Mahlgut mit der Mahlvorrichtung 5 zu zerkleinern.

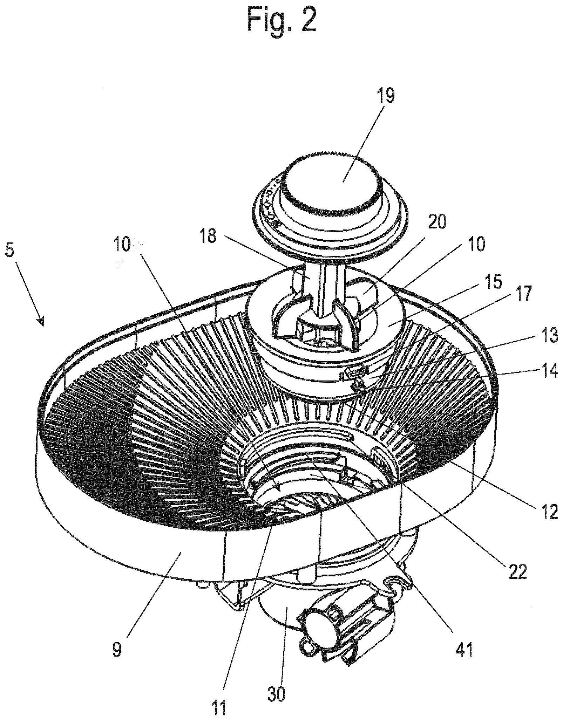

In Figur 2 ist ein Boden 9 des Bohnenbehälters 3 gezeigt, der zu einer Öffnung 10 geneigt ausgebildet ist und durch die die Kaffeebohnen zum Zerkleinern bewegt werden. Die Mahlvorrichtung 5 umfasst dabei ein unteres Mahlwerkzeug 11, beispielsweise eine Mahlscheibe oder einen Mahlkegel, und ein oberes Mahlwerkzeug 12, die zwischen sich einen Mahlspalt ausbilden, in dem das Mahlgut zerkleinert wird. Das obere Mahlwerkzeug 12 kann über ein Federelement zu dem unteren Mahlwerkzeug 11 hin vorgespannt sein. In dem dargestellten Ausführungsbeispiel ist das untere Mahlwerkzeug 11 über einen Motor drehbar angetrieben.

Das obere Mahlwerkzeug 12 ist dabei als Mahlscheibe ausgebildet, kann aber ebenfalls als Mahlkegel oder anderes drehbares Mahlwerk ausgebildet sein.

Das obere Mahlwerkzeug 12 ist an einem Träger 13 drehfest gehalten, der wiederum an seiner Oberseite mit einem Verstellelement 15 verbunden ist. Das Verstellelement 15 weist eine mittige Öffnung zur Ausbildung eines Kanals 16 auf, der von dem Bohnenbehälter 3 durch das Verstellelement 15, den Träger 13 und das obere Mahlwerkzeug 12 verläuft.

Das Verstellelement 15 besitzt ein nach oben hervorstehendes Bedienelement 18 in Form eines Stabes, an dessen Oberseite ein Drehknopf 19 fixiert oder integral ausgebildet ist. An dem Drehknopf 19 sind Markierungen vorgesehen, die den Mahlgrad in der jeweiligen Einstellposition anzeigen. An dem Verstellelement 15 sind ferner Führungsstege 20 vorgesehen, um das Einleiten der Kaffeebohnen in den Kanal 16 zu erleichtern. An dem Stutzen des Bodens 9, der die Öffnung 10 umgibt, ist mindestens eine hervorstehende Rippe 22 ausgebildet, die zur Führung eines Vorsprunges 17 dient, der an dem Verstellelement 15 angeordnet ist. In vertikaler Richtung unterhalb der stegförmigen Rippe 22 ist ein Führungselement 41 in Form eines Steges ausgebildet, der geneigt zur Horizontalen ausgerichtet ist. Über dieses Führungselement 41 kann der Träger 13, der drehfest mit dem Verstellelement 15 verbunden ist, in vertikale Richtung relativ zu dem Verstellelement 15 bewegt werden.

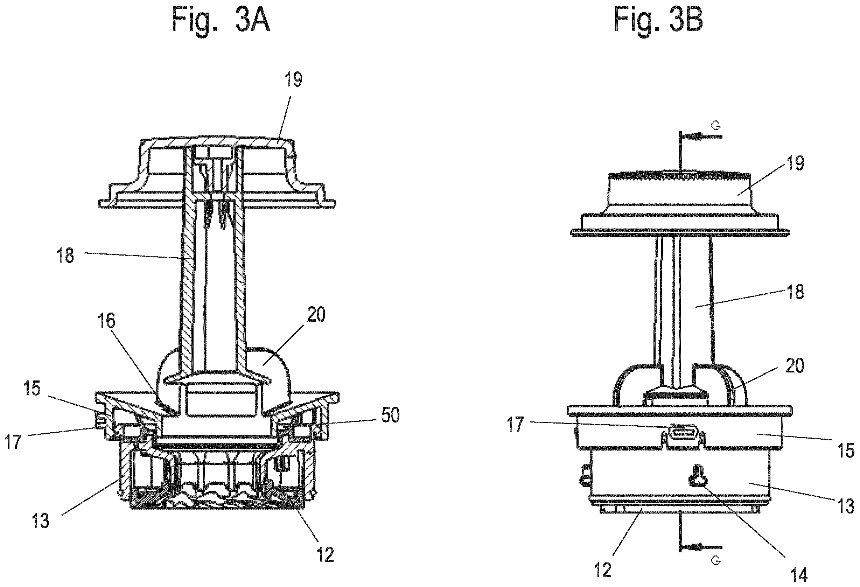

In den Figuren 3A und 3B ist das Verstellelement 15 in einer herausgenommenen Position gezeigt. In dieser Position lässt sich der Boden 9 der Mahlvorrichtung 5 sowie das untere Mahlwerkzeug 11 reinigen. Es ist erkennbar, dass das Verstellelement 15 eine nach unten offene ringförmige Aufnahme ausbildet, in der zumindest ein Teil des Trägers 13 aufgenommen ist, wobei der Träger 13 nach oben mit Spiel in der Aufnahme angeordnet ist und entsprechend in vertikale Richtung bewegbar ist. Zwischen dem Verstellelement 15 und dem Träger 13 ist eine Dichtung 50 vorgesehen, die ringförmig ausgebildet ist und zur Abdichtung eines Spaltes zwischen dem Träger 13 und dem Verstellelement 15 dient, insbesondere wenn ein vertikales Verschieben des Trägers 13 stattfindet. An dem Träger 13 ist das obere Mahlwerkzeug 12 festgelegt.

An dem Träger 13 können über dem Umfang verteilt mehrere Vorsprünge 14 ausgebildet sein, die als Mitnehmer wirken, wenn das Verstellelement 15 gedreht wird. An dem Verstellelement 15 sind ebenfalls über den Umfang verteilt ein oder mehrere Vorsprünge 17 ausgebildet, die nach Art eines Bajonettverschlusses mit der Rippe 22 zusammenwirken.

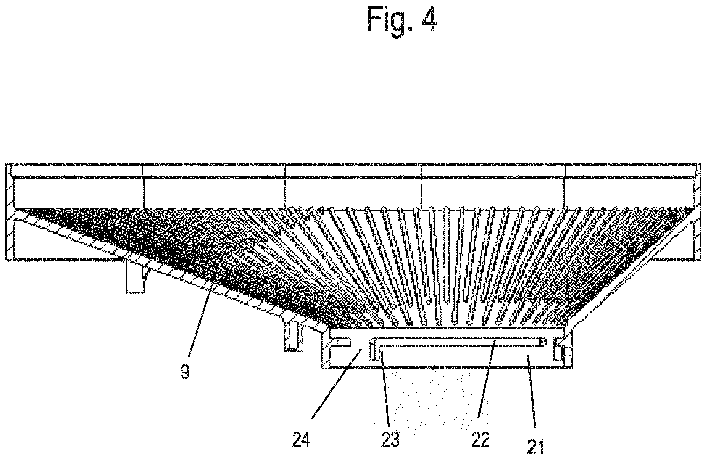

In Figur 4 ist der Boden 9 des Bohnenbehälters 3 gezeigt. Es ist erkennbar, dass um die Öffnung ein Stutzen 21 vorgesehen ist, an dem über den Umfang verteilt mehrere radial nach innen hervorstehende Rippen 22 ausgebildet sind, an denen der Vorsprung 17 an dem Verstellelement 15 verriegelt werden kann, damit das Verstellelement 15 nicht nach oben angehoben werden kann. An der Rippe 22 ist ein nach unten gerichteter Anschlag 23 vorgesehen, der die Drehung des Verstellelementes 15 an dem Stutzen 21 beschränkt. Zwischen zwei benachbarten Rippe 22 an dem Stutzen 21 ist eine Öffnung 24 vorgesehen, durch die der Vorsprung 17 an dem Verstellelement 15 einfügbar ist.

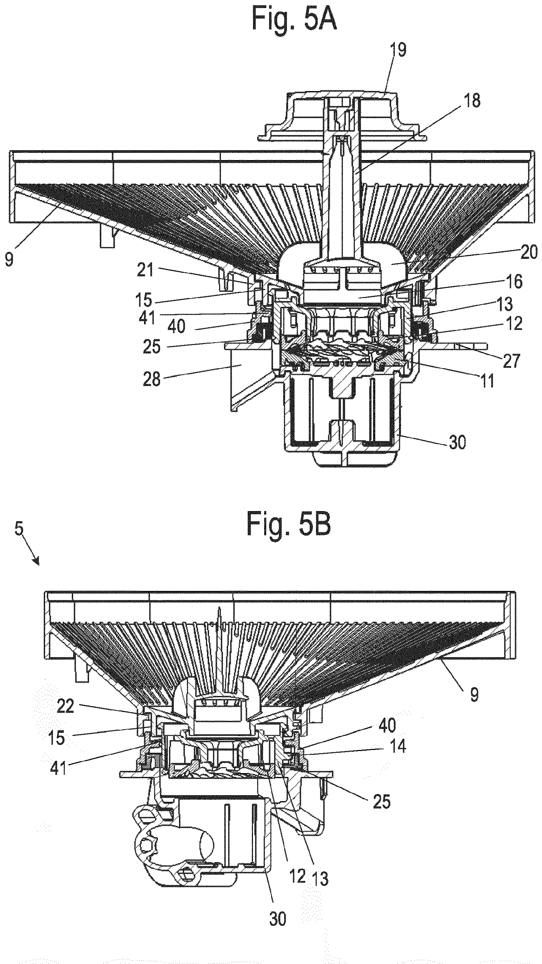

In den Figuren 5A und 5B ist die Mahlvorrichtung 5 in einer montierten Position gezeigt. Kaffeebohnen können über den Boden 9 und eine geneigte Fläche an dem Verstellelement 15 in den Kanal 16 gelangen, um in den Mahlspalt zwischen dem oberen Mahlwerkzeug 12 und dem unteren Mahlwerkzeug 11 zu gelangen. Das untere Mahlwerkzeug 11 ist in einem Gehäuse 30 angeordnet, in dem ein Antrieb zum Drehen des Mahlwerkzeuges 11 vorgesehen sein kann. Von dem Mahlspalt gelangt das zerkleinerte Mahlgut zu einem Auslass 28 an einer Seite des unteren Mahlwerkzeugs 11. An dem Gehäuse 30 befindet sich ein radial hervorstehender Flansch 27, an dem ein Ring 25 verstellbar gehalten ist. Um den Ring 25 ist ein Haltering 40 vorgesehen, an dem die nach innen hervorstehenden Führungselemente 41 in Form von geneigten Stegen ausgebildet sind.

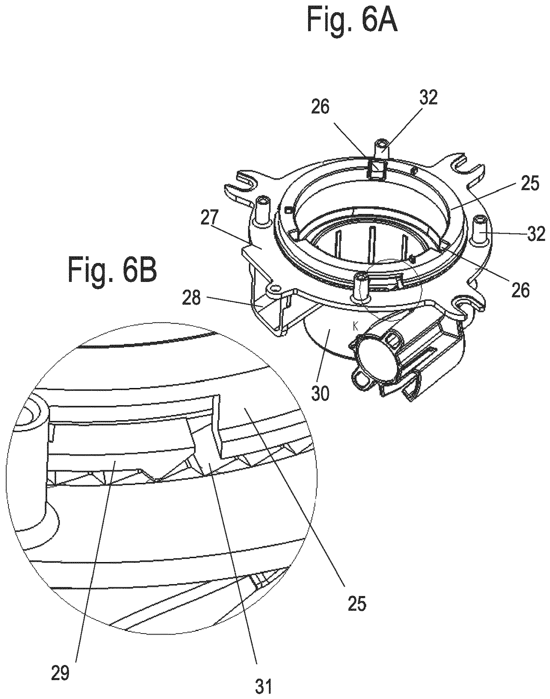

In den Figuren 6A und 6B ist der Bereich des Gehäuses 30 an dem Flansch 27 gezeigt, auf dem der Ring 25 angeordnet ist. Der Ring 25 weist nach oben an mehreren Stellen Aufnahmen 26 auf, in die jeweils ein als Vorsprung ausgebildeter Mitnehmer 14 an dem Träger 13 einfügbar ist. Dadurch kann der Ring 25 drehfest mit dem Träger 13 verbunden werden. Durch Drehen des Ringes 25 kann der Träger 13 bei einem Betrieb der Mahlvorrichtung fixiert werden. Hierfür sind an dem Ring 25 ein oder mehrere Raststege 29 ausgebildet, die in eine Verzahnung 31 an dem Gehäuse 30 eingreifen. Über die Raststege 29 wird eine Drehung des Trägers 13 nur bei Überschreiten der Haltekraft der Raststege 29 ermöglicht. Es ist natürlich auch möglich, Raststege oder andere Haltemittel an dem Gehäuse 30 vorzusehen, die mit einer Verzahnung an dem Ring 25 in Eingriff stehen.

An dem Flansch 27 sind ferner nach oben hervorstehende Zapfen 32 ausgebildet, die zur Fixierung des Halteringes 40 dienen.

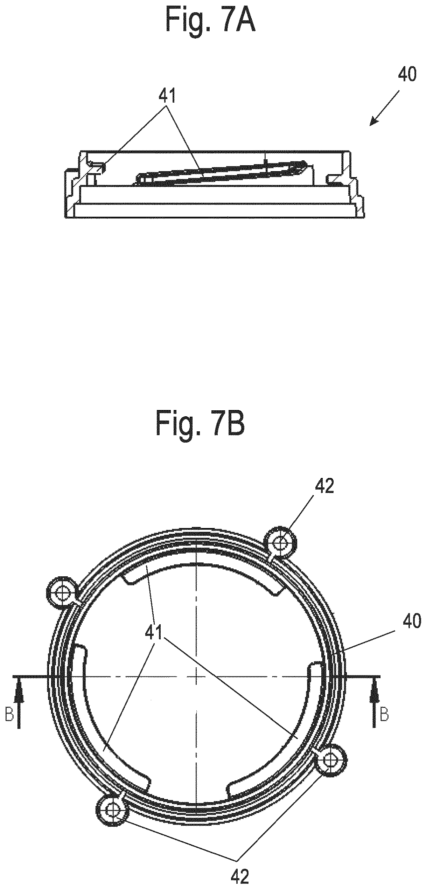

In den Figuren 7A und 7B ist der Haltering 40 gezeigt, der an seiner Innenseite mehrere nach innen ragende Stege als Führungselemente 41 aufweist, die zur horizontalen Richtung geneigt ausgebildet sind, so dass bei einer Drehung des Trägers 13 die Vorsprünge 14 entlang der Führungselemente 41 verschoben werden und dadurch der Träger 13 zusammen mit dem oberen Mahlwerkzeug 12 in vertikale Richtung bewegt wird. Der Haltering 40 ist dabei drehfest an dem Gehäuse 30 gehalten, wobei hierfür mehrere Haltemittel 42 mit Ösen vorgesehen sind, die für eine drehfeste Verbindung auf die Zapfen 32 aufgesteckt werden.

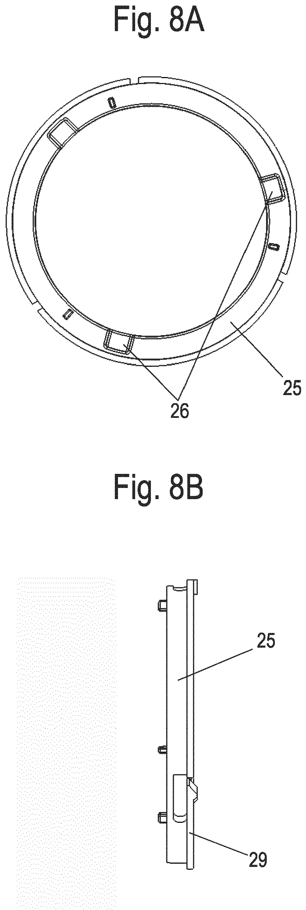

In den Figuren 8A und 8B ist der Ring 25 gezeigt, der drehbar an dem Gehäuse 30 angeordnet ist. Der Ring 25 liegt an einer Oberseite des Gehäuses 30 auf und besitzt mehrere Aufnahmen 26, in die jeweils ein in radiale Richtung hervorstehender Mitnehmer 14 an dem Träger 13 eingefügt ist. Dadurch können der Träger 13 und der Ring 25 nur zusammen gedreht werden, wobei die einmal erreichte Drehposition über die Raststege 29 fixiert wird.

Die Verstelleinrichtung für die Einstellung des Mahlgrades kann sich vollständig innerhalb des Bohnenbehälters 3 befinden. Durch Drehen des Verstellelementes 15 kann der Träger 13 ohne Zwischenschaltung eines Getriebes unmittelbar entlang der Führungselemente 41 gedreht werden, um relativ zu dem Verstellelement 15 in vertikale Richtung verschoben zu werden. Optional kann der Drehknopf 19 oder ein anderes Bedienelement über eine Öffnung in dem Deckel 4 ragen.

In dem dargestellten Ausführungsbeispiel sind zum Verstellen des Trägers 13 radial nach innen hervorstehende Stege als Führungselemente 41 vorgesehen. Es ist natürlich auch möglich, die Führungselemente als Nut oder als profilierter Führungssteg auszubilden.

Zudem können auch an dem Träger 13 geneigt verlaufende Führungsrippen oder Nuten ausgebildet sein, um ein relatives Verschieben des Trägers 13 zu dem Verstellelement 15 in vertikale Richtung zu bewirken.

### Bezugszeichenliste

- 1: Kaffeemaschine
- 2: Gehäuse
- 3: Bohnenbehälter
- 4: Deckel
- 5: Mahlvorrichtung
- 6: Filterhalter
- 7: Gefäß
- 8: Bedienfeld
- 9: Boden
- 10: Öffnung
- 11: unteres Mahlwerkzeug
- 12: oberes Mahlwerkzeug
- 13: Träger
- 14: Mitnehmer
- 15: Verstellelement
- 16: Kanal
- 17: Vorsprung
- 18: Bedienelement
- 19: Drehknopf
- 20: Führungssteg
- 21: Stutzen
- 22: Rippe
- 23: Anschlag
- 24: Öffnung
- 25: Ring
- 26: Aufnahme
- 27: Flansch
- 28: Auslass
- 29: Raststeg
- 30: Gehäuse
- 31: Verzahnung
- 32: Zapfen
- 40: Haltering
- 41: Führungselement
- 42: Haltemittel
- 50: Dichtung

## Patentansprüche

1. Mahlvorrichtung (5), insbesondere für eine Kaffeemaschine (1), mit einem in einem Gehäuse angeordneten oberen Mahlwerkzeug (12) und einem unteren Mahlwerkzeug (11), das für einen Mahlvorgang relativ zu dem oberen Mahlwerkzeug (12) drehbar ist, wobei eine Verstelleinrichtung zur Einstellung eines Mahlgrades für das durch die Mahlwerkzeuge (11, 12) zerkleinerte Mahlgut vorgesehen ist, und das obere Mahlwerkzeug (12) an einem Träger (13) gehalten ist, **dadurch gekennzeichnet, dass** der Träger (13) für das obere Mahlwerkzeug (12) in vertikale Richtung verschiebbar, aber drehfest an einem Verstellelement (15) der Verstelleinrichtung gehalten ist und die Verstelleinrichtung Führungsmittel (41) für den Träger (13) umfasst, die bei einer Drehung des Verstellelementes (15) den Träger (13) mit dem oberen Mahlwerk (12) in vertikale Richtung zur Einstellung des Mahlgrad bewegen.

2. Mahlvorrichtung nach Anspruch 1, **dadurch gekennzeichnet, dass** der Träger (13) mit dem oberen Mahlwerkzeug (12) aus dem Gehäuse der Mahlvorrichtung abnehmbar ist.

3. Mahlvorrichtung nach Anspruch 1 oder 2, **dadurch gekennzeichnet, dass** das Verstellelement (15) mit dem Träger (13) über eine Bajonettverriegelung an dem Gehäuse verriegelbar ist.

4. Mahlvorrichtung nach Anspruch 3, **dadurch gekennzeichnet, dass** die Bajonettverriegelung mindestens eine Rippe (22) umfasst, die das Verstellelement (15) gegen ein Anheben sichert und ein Vorsprung (17) des Verstellelementes (15) entlang der Rippe (22) beim Drehen des Verstellelementes (15) geführt ist.

5. Mahlvorrichtung nach einem der vorhergehenden Ansprüche, **dadurch gekennzeichnet, dass** an dem Verstellelement (15) ein nach oben hervorstehendes Bedienelement (18) vorgesehen ist, mittels dem der Träger (13) drehbar ist.

6. Mahlvorrichtung nach Anspruch 5, **dadurch gekennzeichnet, dass** das Bedienelement (18) teilweise oder vollständig in einem Innenraum eines Behälters (3) zur Bevorratung von Mahlgut angeordnet ist.

7. Mahlvorrichtung nach Anspruch 5 oder 6, **dadurch gekennzeichnet, dass** das nach oben hervorstehende Bedienelement (18) einen drehbaren Stab umfasst.

8. Mahlvorrichtung nach einem der vorhergehenden Ansprüche, **dadurch gekennzeichnet, dass** zwischen dem Träger (13) und dem Verstellelement (15) eine Dichtung (50) vorgesehen ist.

9. Mahlvorrichtung nach einem der vorhergehenden Ansprüche, **dadurch gekennzeichnet, dass** der Träger (13) in eine nach unten offene Aufnahme an dem Verstellelement (15) zumindest teilweise eingefügt ist.

10. Mahlvorrichtung nach einem der vorhergehenden Ansprüche, **dadurch gekennzeichnet, dass** das obere Mahlwerkzeug (12) in einem Ring (25) angeordnet ist, der an dem Gehäuse drehbar gelagert ist und mindestens ein Rastelement (29) aufweist, um das obere Mahlwerkzeug (12) in der eingestellten Position zu verrasten.

11. Mahlvorrichtung nach Anspruch 10, **dadurch gekennzeichnet, dass** der Ring (25) und/oder das Gehäuse einen biegbaren Rasthaken aufweist, der in Eingriff mit einer Verzahnung steht.

12. Mahlvorrichtung nach einem der vorhergehenden Ansprüche, **dadurch gekennzeichnet, dass** in dem Verstellelement (15) und dem Träger (13) eine mittige Öffnung zur Durchführung des Mahlgutes vorgesehen ist

13. Kaffeemaschine (1) mit einem Bohnenbehälter (3), unter dem eine Mahlvorrichtung (5) nach einem der vorhergehenden Ansprüche angeordnet ist.

## Claims

1. Grinder (5), in particular for a coffee machine (1), having an upper grinding tool (12) arranged in a housing and a lower grinding tool (11) which can be rotated relative to the upper grinding tool (12) for a grinding operation, wherein an adjusting device is provided for setting a degree of grinding for the material to be ground which is comminuted by the grinding tools (11, 12), and the upper grinding tool (12) is held on a carrier (13), **characterized in that** the carrier (13) for the upper grinding tool (12) is held on an adjusting element (15) of the adjusting device so as to be displaceable in the vertical direction but non-rotatable, and the adjusting device comprises guide means (41) for the carrier (13) which, when the adjusting element (15) is rotated, move the carrier (13) with the upper grinding tool (12) in the vertical direction to adjust the degree of grinding.

2. Grinder according to claim 1, **characterized in that** the carrier (13) with the upper grinding tool (12) is removable from the housing of the grinder.

3. Grinder according to claim 1 or 2, **characterized in that** the adjusting element (15) can be locked to the carrier (13) via a bayonet lock on the housing.

4. Grinder according to claim 3, **characterized in that** the bayonet lock comprises at least one rib (22) which secures the adjusting element (15) against lifting and a projection (17) of the adjusting element (15) is guided along the rib (22) when the adjusting element (15) is rotated.

5. Grinder according to one of the preceding claims, **characterized in that** an upwardly projecting operating element (18) is provided on the adjusting element (15), by means of which the carrier (13) can be rotated.

6. Grinder according to claim 5, **characterized in that** the operating element (18) is arranged partially or completely in an interior of a container (3) for storing material to be ground.

7. Grinder according to claim 5 or 6, **characterized in that** the upwardly projecting operating element (18) comprises a rotatable rod.

8. Grinder according to one of the preceding claims, **characterized in that** a seal (50) is provided between the carrier (13) and the adjusting element (15).

9. Grinder according to one of the preceding claims, **characterized in that** the carrier (13) is at least partially inserted into a downwardly open receptacle on the adjusting element (15).

10. Grinder according to one of the preceding claims, **characterized in that** the upper grinding tool (12) is arranged in a ring (25) which is rotatably mounted on the housing and has at least one latching element (29) in order to latch the upper grinding tool (12) in the set position.

11. Grinder according to claim 10, **characterized in that** the ring (25) and/or the housing has a bendable latching hook which is in engagement with a toothing.

12. Grinder according to one of the preceding claims, **characterized in that** a central opening is provided in the adjusting element (15) and the carrier (13) for the passage of the material to be ground.

13. Coffee machine (1) having a bean container (3), under which a grinder (5) according to one of the preceding claims is arranged.

## Revendications

1. Moulin (5), en particulier pour une machine à café (1), avec un broyeur supérieur (12) disposé dans un boîtier et un broyeur inférieur (11) capable de rotation par rapport au broyeur supérieur (12) pour une opération de mouture, dans lequel est prévu un dispositif de déplacement pour le réglage d'un degré de broyage de la matière à moudre broyée par les broyeurs (11, 12) et le broyeur supérieur (12) est retenu sur un support (13), **caractérisé en ce que** le support (13) du broyeur supérieur (12) est retenu avec possibilité de translation dans le sens vertical mais de façon fixe en rotation sur un élément de déplacement (15) du dispositif de déplacement et le dispositif de déplacement comprend des moyens de guidage (41) pour le support (13), qui déplacent le support (13) avec le broyeur supérieur (12) dans le sens vertical lors d'une rotation de l'élément de déplacement (15) pour régler le degré de broyage.

2. Moulin selon la revendication 1, **caractérisé en ce que** le support (13) peut être sorti du boîtier du moulin avec le broyeur supérieur (12).

3. Moulin selon la revendication 1 ou 2, **caractérisé en ce que** l'élément de déplacement (15) peut être verrouillé sur le boîtier avec le support (13) à l'aide d'un verrou à baïonnette.

4. Moulin selon la revendication 3, **caractérisé en ce que** le verrou à baïonnette comprend au moins une nervure (22) qui empêche l'élément de déplacement (15) de se soulever et une saillie (17) de l'élément de déplacement (15) est guidée le long de la nervure (22) lors de la rotation de l'élément de déplacement (15).

5. Moulin selon l'une des revendications précédentes, **caractérisé en ce qu'**il est prévu sur l'élément de déplacement (15) un élément d'actionnement (18) en saillie vers le haut, au moyen duquel le support (13) peut être tourné.

6. Moulin selon la revendication 5, **caractérisé en ce que** l'élément d'actionnement (18) est disposé partiellement ou entièrement dans un espace intérieur d'un récipient (3) servant de réservoir de matière à moudre.

7. Moulin selon la revendication 5 ou 6, **caractérisé en ce que** l'élément d'actionnement (18) en saillie vers le haut comprend une barre capable de rotation.

8. Moulin selon l'une des revendications précédentes, **caractérisé en ce qu'**un joint d'étanchéité (50) est prévu entre le support (13) et l'élément de déplacement (15).

9. Moulin selon l'une des revendications précédentes, **caractérisé en ce que** le support (13) est introduit au moins partiellement dans un logement ouvert vers le bas sur l'élément de déplacement (15).

10. Moulin selon l'une des revendications précédentes, **caractérisé en ce que** le broyeur supérieur (12) est disposé dans un anneau (25) supporté avec possibilité de rotation sur le boîtier et qui présente au moins un élément d'enclenchement (29) pour enclencher le broyeur supérieur (12) dans la position réglée.

11. Moulin selon la revendication 10, **caractérisé en ce que** l'anneau (25) et/ou le boîtier présentent un crochet d'enclenchement flexible qui se met en prise avec une denture.

12. Moulin selon l'une des revendications précédentes, **caractérisé en ce qu'**une ouverture centrale est prévue dans l'élément de déplacement (15) et le support (13) pour le passage de la matière à moudre.

13. Machine à café (1) avec un réservoir à grains (3) sous lequel est disposé un moulin (5) selon l'une des revendications précédentes.
